# EUROPEAN PATENT APPLICATION

(11) **EP 4 625 964 A1**
(43) Date of publication of application: **01.10.2025**
(21) Application number: 24190230.3
(22) Date of filing: 23.07.2024
(51) Int. Cl.: H04N 1/60

(54) **IMAGE FORMING SYSTEM, PRINTING CONTROL PROGRAM, AND PRINTING CONTROL METHOD**

(30) Priority: 25.03.2024 JP 2024048477
(71) Applicant: FUJIFILM Business Innovation Corp., Minato-ku Tokyo (JP)
(72) Inventor: MATSUBARA, Koichi, Yokohama-shi, Kanagawa (JP); TANAKA, Shogo, Yokohama-shi, Kanagawa (JP)
(74) Representative: Kurig, Thomas

(57) **Abstract**

An image forming system includes a processor configured to perform control such that printing is performed for a specific color of a gradation pattern printed on a recording medium by using a second screen obtained by changing at least one of the number of screen lines or a screen angle of a first screen used for a printing job and printing is performed for a color other than the specific color of the gradation pattern in a same manner as the screen used for the printing job in a case where the gradation pattern is scanned by a scanning device and is gradation-corrected.

## Description

### BACKGROUND OF THE INVENTION

### (i) Field of the Invention

The present disclosure relates to an image forming system, a printing control program, and a printing control method.

### (ii) Description of Related Art

For example, JP2001-239731A describes a printing method of a calibration pattern in a printer that records an image on a recording sheet while leaving a margin and cuts at least a part of the margin with a cutter. In this printing method, a calibration pattern is printed in the margin cut by the cutter during the recording of the image.

### SUMMARY OF THE INVENTION

Incidentally, there is a technology of performing gradation correction by scanning a gradation pattern printed on a recording medium such as a sheet by a scanning device. In general, although a screen used for the gradation pattern is similar to a screen used for a printing job, there may be a specific color that causes moire due to a relationship with an arrangement direction of pixels of an image sensor of the scanning device or a relationship with a pitch of the pixels of the image sensor. In this case, in a case where the screen used for the printing job is used for the specific color of the gradation pattern, RGB values of the gradation pattern scanned by the scanning device vary, and it is difficult to accurately perform the gradation correction.

An object of the present disclosure is to provide an image forming system, a printing control program, and a printing control method capable of accurately performing gradation correction in a case where a gradation pattern printed on a recording medium is scanned by a scanning device and is gradation-corrected as compared with a case where a screen used for a printing job and a screen for the gradation pattern are the same.

In order to achieve the above object, according to a first aspect of the present disclosure, there is provided an image forming system including a processor configured to perform control such that printing is performed for a specific color of a gradation pattern printed on a recording medium by using a second screen obtained by changing at least one of the number of screen lines or a screen angle of a first screen used for a printing job and printing is performed for a color other than the specific color of the gradation pattern in a same manner as the screen used for the printing job in a case where the gradation pattern is scanned by a scanning device and is gradation-corrected.

In addition, according to a second aspect of the present disclosure, in the image forming system according to the first aspect, the specific color may be black.

In addition, according to a third aspect of the present disclosure, in the image forming system according to the first aspect or the second aspect, the first screen may have a same direction of a main component or a sub-component as a scanning direction of the scanning device, and have a relationship in which the number of screen lines of the first screen is an integer multiple of a scanning resolution of the scanning device.

In addition, according to a fourth aspect of the present disclosure, in the image forming system according to the third aspect, a difference between the number of screen lines of the second screen and the number of screen lines of the first screen may be 50 lines or less, and a difference between a screen angle of the second screen with respect to the scanning direction and a screen angle of the first screen with respect to the scanning direction may be 15 degrees or more and 75 degrees or less.

In addition, according to a fifth aspect of the present disclosure, in the image forming system according to any one of the first aspect to the fourth aspect, a plurality of types of screens used for the printing job may be stored in advance, and the second screen may be a screen having the number of screen lines closest to the number of screen lines of the first screen, among the plurality of types of screens.

In addition, according to a sixth aspect of the present disclosure, in the image forming system according to any one of the first aspect to the fifth aspect, the processor may be configured to perform gradation correction based on a scanning result obtained by scanning the gradation pattern before execution of the printing job or during the execution of the printing job.

Further, in order to achieve the above object, according to a seventh aspect of the present disclosure, there is provided a printing control program causing a computer to execute processing including performing control such that printing is performed for a specific color of a gradation pattern printed on a recording medium by using a second screen obtained by changing at least one of the number of screen lines or a screen angle of a first screen used for a printing job and printing is performed for a color other than the specific color of the gradation pattern in a same manner as the screen used for the printing job in a case where the gradation pattern is scanned by a scanning device and is gradation-corrected.

Further, in order to achieve the above object, according to an eighth aspect of the present disclosure, there is provided a printing control method including performing control such that printing is performed for a specific color of a gradation pattern printed on a recording medium by using a second screen obtained by changing at least one of the number of screen lines or a screen angle of a first screen used for a printing job and printing is performed for a color other than the specific color of the gradation pattern in a same manner as the screen used for the printing job in a case where the gradation pattern is scanned by a scanning device and is gradation-corrected.

According to the first aspect, the seventh aspect, and the eighth aspect of the present disclosure, in a case where the gradation pattern printed on the recording medium is scanned by the scanning device and is gradation-corrected, it is possible to accurately perform the gradation correction as compared with a case where the screen used for the printing job and the screen of the gradation pattern are the same.

According to the second aspect of the present disclosure, in a case where the specific color is black, it is possible to perform accurately the gradation correction as compared with a case where the screen used for the printing job and the screen for the gradation pattern are the same.

According to a third aspect of the present disclosure, in a case where the number of screen lines of the first screen used for the printing job is synchronized with the scanning resolution of the scanning device, it is possible to accurately perform the gradation correction as compared with a case where the first screen and the screen of the gradation pattern are the same.

According to the fourth aspect of the present disclosure, it is possible to define the difference in the number of screen lines and the difference in the screen angle in order to perform the gradation correction with higher accuracy.

According to the fifth aspect of the present disclosure, it is possible to accurately perform the gradation correction by using the existing screen without mounting the screen for the specific color.

According to the sixth aspect of the present disclosure, it is possible to perform the gradation correction before the execution of the printing job or during the execution of the printing job.

### BRIEF DESCRIPTION OF THE DRAWINGS

Exemplary embodiment(s) of the present invention will be described in detail based on the following figures, wherein:
Fig. 1 is a diagram illustrating an example of a configuration of an image forming system according to a first exemplary embodiment;
Fig. 2 is a diagram illustrating an example of a recording medium on which a gradation pattern is printed;
Fig. 3 is a block diagram illustrating an example of an electrical configuration of a print server according to the first exemplary embodiment;
Fig. 4 is a block diagram illustrating an example of an electrical configuration of a printing device according to the first exemplary embodiment;
Fig. 5 is a diagram illustrating a state where a scanning device according to the exemplary embodiment is viewed from a side;
Fig. 6 is a diagram illustrating an example of a screen;
Fig. 7 is a block diagram illustrating an example of a functional configuration of the print server according to the exemplary embodiment;
Fig. 8 is a diagram for describing a form in which a screen of a K color is changed in the recording medium;
Fig. 9 is a flowchart illustrating an example of a flow of processing by a printing control program according to the first exemplary embodiment; and
Fig. 10 is a flowchart illustrating an example of a flow of processing by a printing control program according to a second exemplary embodiment.

### DETAILED DESCRIPTION OF THE INVENTION

Hereinafter, an example of a mode for implementing a technology of the present disclosure will be described in detail with reference to the drawings. Note that, components and processing having similar operations, actions, and functions are given identical reference symbols throughout the drawings, and redundant descriptions may be omitted as appropriate. Each drawing is only schematically illustrated to the extent that the technology of the present disclosure can be fully understood. Thus, the technology of the present disclosure is not limited only to the illustrated examples. In the present exemplary embodiment, descriptions of configurations that are not directly related to the technology of the present disclosure and well-known configurations may be omitted.

### [First Exemplary Embodiment]

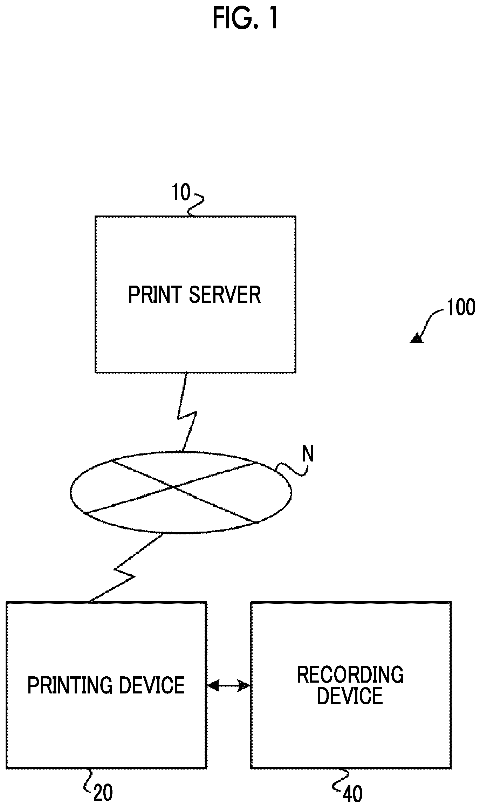

Fig. 1 is a diagram illustrating an example of a configuration of an image forming system 100 according to a first exemplary embodiment.

As illustrated in Fig. 1, the image forming system 100 according to the present exemplary embodiment includes a print server 10, a printing device 20, and a scanning device 40.

The print server 10 is connected to the printing device 20 via a network N. Note that, the Internet, a local area network (LAN), a wide area network (WAN), or the like is used for the network N. A connection form of the network N is not limited and may be any of a wired form, a wireless form, or a form in which the wired form and the wireless form are mixed. The print server 10 performs various settings on the printing device 20, transmits a printing job to the printing device 20, and controls a printing operation of the printing device 20.

The printing device 20 is a device that executes printing processing according to the printing job from the print server 10. Specifically, the printing device 20 has a printing function of printing an image represented by image data included in the printing job on a recording medium such as a sheet.

The scanning device 40 is connected to a rear stage of the printing device 20 and has a function of scanning the recording medium on which the image is printed by the printing device 20. Specifically, the image forming system 100 includes a function of performing gradation correction by scanning a gradation pattern printed on the recording medium by the scanning device 40 during the execution of the printing job (hereinafter, referred to as an "in-job correction function"). However, the in-job correction function can be executed before the execution of the printing job.

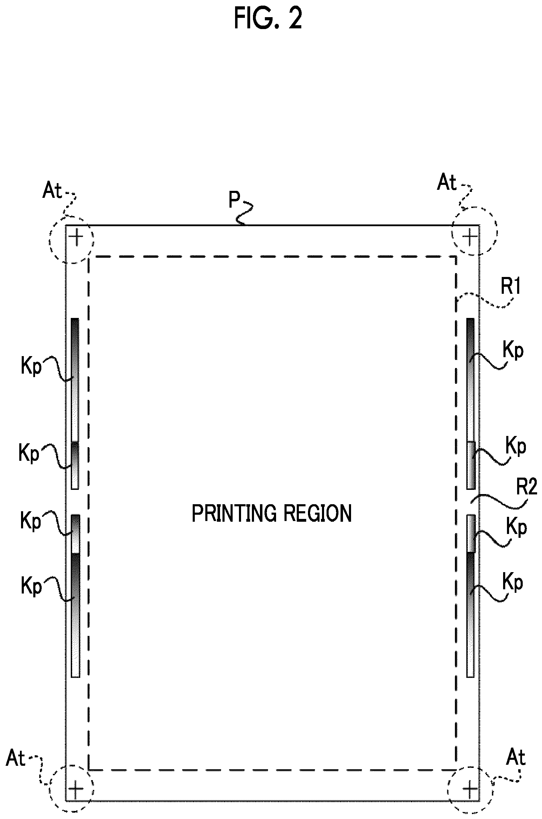

Fig. 2 is a diagram illustrating an example of a recording medium P on which a gradation pattern is printed. The recording medium P is, for example, an A3-sized sheet, and includes a printing region R1 which is a region in which image data to be printed by a user is printed, and a blank region R2 which is a region in which gradation patterns Kp and alignment crop marks At are printed. The blank region R2 is a region that is cut after printing.

The gradation patterns Kp and the alignment crop marks At are scanned by the scanning device 40, and density fluctuation and front-back misalignment are detected during the execution of the printing job. The gradation patterns Kp are a plurality of types of patterns for detecting the density fluctuation. In the in-job correction function, gradation patterns Kp of a first page and gradation patterns Kp of subsequent pages are compared with each other, and a gradation correction value based on the comparison result is fed back to the printing device 20. For example, a density of a gradation pattern of yellow (Y), magenta (M), cyan (C), and black (K) is measured, and a correction value is calculated such that a deviation from a reference value (for example, the density of the gradation pattern Kp of the first page) is eliminated. Gradation characteristics of the printing device 20 are controlled such that a reference density is obtained based on this correction value.

The "crop mark" described herein is a guide for aligning front and back surfaces of the recording medium P. The alignment crop mark At is a mark for detecting the front-back misalignment. In the in-job correction function, the alignment crop marks At of the first page and the alignment crop marks At of the subsequent pages are compared with each other, and a correction value based on the comparison result is fed back to the printing device 20.

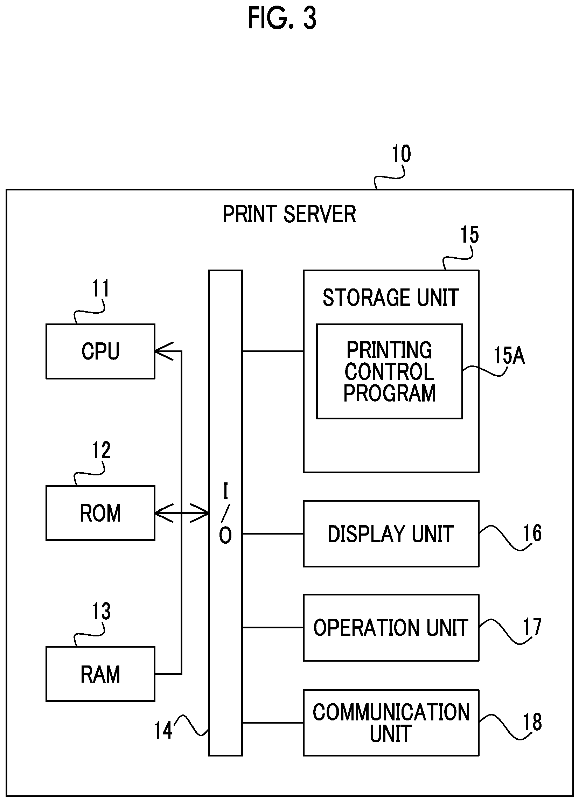

Fig. 3 is a block diagram illustrating an example of an electrical configuration of the print server 10 according to the first exemplary embodiment.

As illustrated in Fig. 3, the print server 10 according to the present exemplary embodiment includes a central processing unit (CPU) 11, a read only memory (ROM) 12, a random access memory (RAM) 13, an input and output interface (I/O) 14, a storage unit 15, a display unit 16, an operation unit 17, and a communication unit 18.

The CPU 11, the ROM 12, the RAM 13, and the I/O 14 are connected via a bus. Functional units including the storage unit 15, the display unit 16, the operation unit 17 and the communication unit 18 are connected to the I/O 14. These functional units can mutually communicate with the CPU 11 via the I/O 14.

The CPU 11, the ROM 12, the RAM 13, and the I/O 14 constitute a control unit. The control unit may be a sub-control unit that controls an operation of a part of the print server 10 or may be a part of a main control unit that controls an overall operation of the print server 10. For example, an integrated circuit such as a large scale integration (LSI) or an integrated circuit (IC) chipset is used for a part or all of the blocks of the control unit. An individual circuit may be used for each of the blocks, or a circuit in which a part or all of the blocks are integrated may be used. The blocks may be provided integrally, or a part of the blocks may be provided separately. In each of the blocks, a part thereof may be separately provided. A dedicated circuit or a general-purpose processor may be used for integration of the control unit, and is not limited to the LSI.

Examples of the storage unit 15 include a hard disk drive (HDD), a solid state drive (SSD), a flash memory, and the like. A printing control program 15A according to the present exemplary embodiment is stored in the storage unit 15. Note that, the printing control program 15A may be stored in the ROM 12.

The printing control program 15A may be installed in advance in, for example, the print server 10. The printing control program 15A may be realized by storing the printing control program 15A in a non-volatile storage medium or distributing the printing control program 15A via the network N and appropriately installing the printing control program 15A in the print server 10. Note that, examples of the non-volatile storage medium include a compact disc read only memory (CD-ROM), a magneto-optical disc, a HDD, a digital versatile disc read only memory (DVD-ROM), a flash memory, a memory card, and the like.

Examples of the display unit 16 include a liquid crystal display (LCD), an organic electro luminescence (EL) display, and the like. The display unit 16 may integrally have a touch panel. For example, devices for operation input such as a keyboard and a mouse are provided in the operation unit 17. The display unit 16 and the operation unit 17 accept various instructions from the user of the print server 10. The display unit 16 displays various kinds of information such as results of processing executed in accordance with the instructions accepted from the user, notifications regarding the processing, and the like.

As an example, the communication unit 18 is connected to the network N such as the Internet, the LAN, or the WAN, and can communicate with the printing device 20 via the network N.

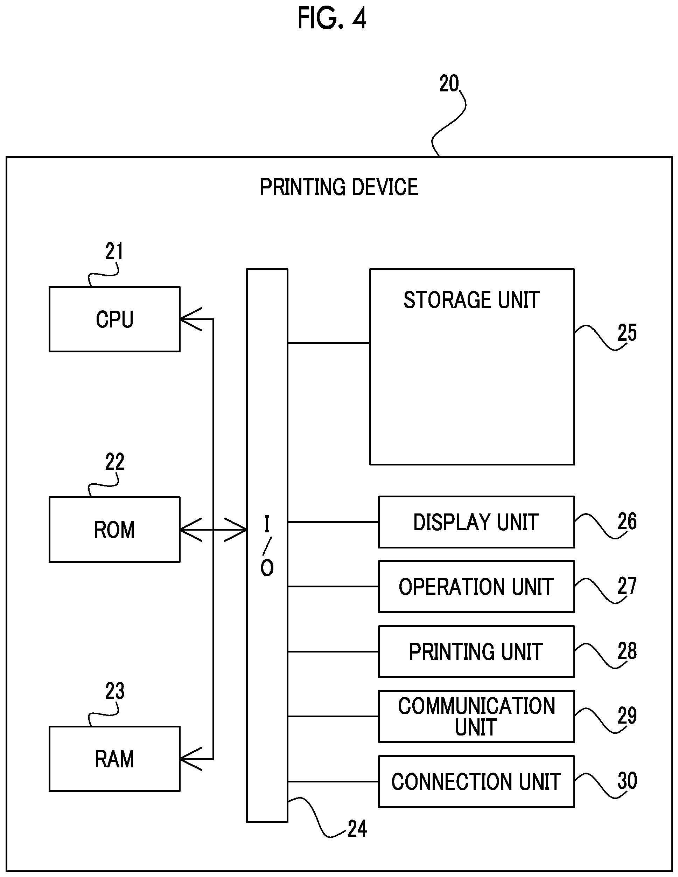

Fig. 4 is a block diagram illustrating an example of an electrical configuration of the printing device 20 according to the first exemplary embodiment.

As illustrated in Fig. 4, the printing device 20 according to the present exemplary embodiment comprises a CPU 21, a ROM 22, a RAM 23, an I/O 24, a storage unit 25, a display unit 26, an operation unit 27, a printing unit 28, a communication unit 29, and a connection unit 30.

The CPU 21, the ROM 22, the RAM 23, and the I/O 24 are connected to each other via a bus. Functional units including the storage unit 25, the display unit 26, the operation unit 27, the printing unit 28, the communication unit 29, and the connection unit 30 are connected to the I/O 24. Each of the functional units can communicate with the CPU 21 via the I/O 24.

A control unit is configured with the CPU 21, the ROM 22, the RAM 23, and the I/O 24. The control unit may be a sub-control unit that controls an operation of a part of the printing device 20, or may be a part of a main control unit that controls an overall operation of the printing device 20.

Examples of the storage unit 25 include an HDD, an SSD, a flash memory, and the like. The storage unit 25 stores a program necessary for executing the printing processing. Note that, the program may be stored in the ROM 22.

Examples of the display unit 26 include a liquid crystal display (LCD), an organic EL display, and the like. The display unit 26 may integrally have a touch panel. Various operation keys such as a numeric keypad and a start key are provided in the operation unit 27, for example. The display unit 26 and the operation unit 27 accept, as an operation panel, various functions and instructions related to settings of the printing device 20.

The printing unit 28 forms an image based on image data obtained by a printing instruction from the print server 10 on a sheet which is an example of the recording medium. Note that, hereinafter, an electrophotographic method will be described as an example of a method of forming an image, but another method such as an inkjet method may be adopted.

In a case where the method of forming the image is the electrophotographic method, the printing unit 28 includes a photoconductor drum, a charging device, an exposure device, a developing device, a transfer device, and a fixing device. The charging device applies a voltage to the photoconductor drum to charge a surface of the photoconductor drum. The exposure device exposes the photoconductor drum charged by the charging device with light corresponding to the image data, and thus, an electrostatic latent image is formed on the photoconductor drum. The developing device develops the electrostatic latent image formed on the photoconductor drum with a toner to form a toner image on the photoconductor drum. The transfer device transfers the toner image formed on the photoconductor drum to the sheet. The fixing device fixes the toner image transferred to the sheet by heating and pressurizing.

The communication unit 29 is a communication interface for connection with the network N such as the Internet, LAN, and WAN, and is capable of communicating with the print server 10 via the network N. The connection unit 30 is an interface for connection with the scanning device 40. The scanning device 40 is connected to a rear stage of the printing device 20, and the recording medium P on which printing is performed by the printing device 20 is transported to the scanning device 40.

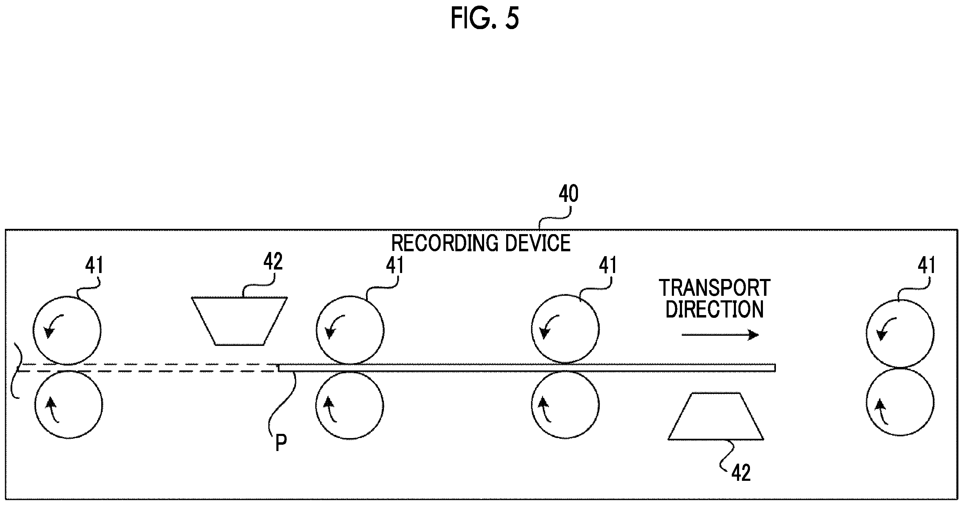

Fig. 5 is a diagram illustrating a state where the scanning device 40 according to the present exemplary embodiment is viewed from a side. The scanning device 40 includes a plurality of pairs of transport rolls 41 that transport the recording medium P, and a plurality of scanning units 42 that scan the gradation patterns Kp of the recording medium P.

In the example in Fig. 5, although four pairs of transport rolls 41 are illustrated, the number of transport rolls is not limited to four pairs. The necessary number of transport rolls may be provided in accordance with performance required for the scanning device 40. The scanning unit 42 on an upstream side in a transport direction scans the gradation patterns Kp on a front surface of the recording medium P, and the scanning unit 42 on a downstream side in the transport direction scans the gradation patterns Kp on a back surface of the recording medium P. Note that, a scanning resolution of the scanning device 40 may be fixed or may be variable.

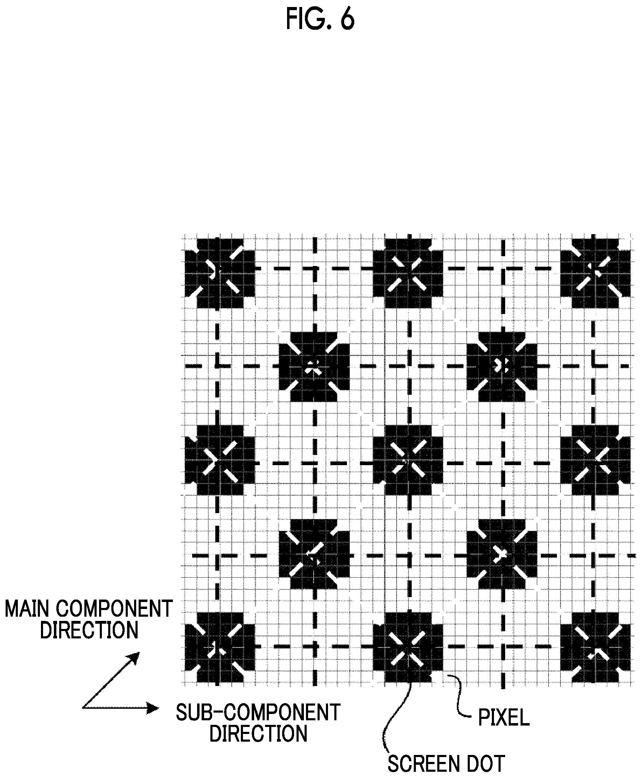

Fig. 6 is a diagram illustrating an example of a screen. In Fig. 6, a white square indicates a pixel in a print resolution unit (for example, 2400 dpi), and a black portion indicates a screen dot. A screen (halftone dot) is a technology of creating a printed region and a non-printed region to express light and shade of an image. In a case where the printed region and the non-printed region are created in the print resolution unit, since printing quality deteriorates, one screen dot is formed with a certain size (period).

The screen includes main components and sub-components. A main component direction is a direction inclined at 45 degrees with respect to a horizontal direction. The main components are represented by, for example, 212 lines and 45 degrees. A sub-component direction is a direction along the horizontal direction. The sub-components are represented by, for example, 300 lines and 0 degrees. Note that, "the number of screen lines" is one of scales representing fineness of printing, and represents fineness of halftone dots (the number of halftone dots in 1 inch = 25.4 mm), and the unit is line per inch (lpi). A "screen angle" represents an angle of a screen line or an output halftone dot with respect to a horizontal line or a vertical line.

The printing device 20 is expressed by, for example, four colors of Y, M, C, and K, but moire may occur in a case where the number of screen lines and the screen angles of the four colors are close to each other. Thus, in general, separate screen angles are used for Y, M, C, and K. For example, a 45-degree screen appropriate for drawing texts or lines is assigned to the K color, and other angles are assigned to the Y color, the M color, and the C color. The Y color, the M color, and the C color are separated by 15 degrees or more in order to prevent moire from becoming a long period.

Here, although a screen used for the gradation patterns Kp is similar to a screen used for the printing job as described above, there may be a specific color that causes moire in a relationship with an arrangement direction of pixels of the scanning unit 42 (image sensor) of the scanning device 40 or a relationship with a pitch of the pixels of the scanning unit 42 (image sensor). In this case, in a case where the screen used for the printing job is used for the specific color of the gradation patterns Kp, RGB values of the gradation patterns Kp scanned by the scanning device 40 vary, and it is difficult to accurately perform the gradation correction.

Thus, in a case where the gradation patterns Kp printed on the recording medium P are scanned by the scanning device 40 and are gradation-corrected, the image forming system 100 according to the present exemplary embodiment performs control such that printing is performed for the specific color of the gradation patterns Kp by using a second screen obtained by changing at least one of the number of screen lines or the screen angle of a first screen used for the printing job and printing is performed for the colors other than the specific color of the gradation patterns Kp in the same manner as the screen used for the printing job.

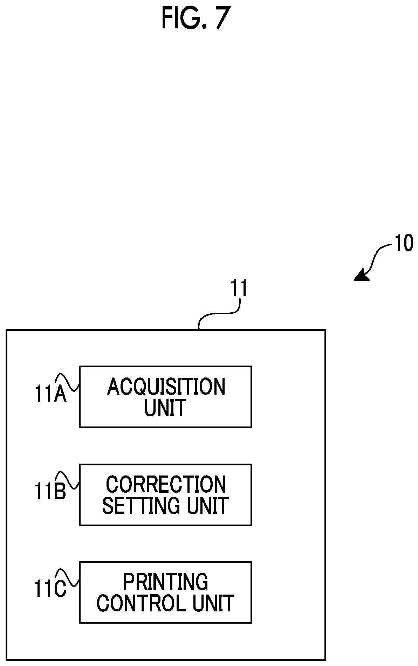

Specifically, the CPU 11 of the print server 10 according to the present exemplary embodiment functions as each unit illustrated in Fig. 7 by writing the printing control program 15A stored in the storage unit 15 or the ROM 12 to the RAM 13 and executing the printing control program 15A. Note that, the CPU 11 is an example of a processor.

Fig. 7 is a block diagram illustrating an example of a functional configuration of the print server 10 according to the present exemplary embodiment.

As illustrated in Fig. 7, the CPU 11 of the print server 10 according to the present exemplary embodiment functions as an acquisition unit 11A, a correction setting unit 11B, and a printing control unit 11C.

The acquisition unit 11A acquires the image data to be printed by the user and acquires a printing condition related to the image data. The acquisition unit 11A accepts the image data and the printing condition via, for example, a print setting screen (not illustrated). The printing condition includes, for example, a sheet type (size, basis weight, and the like) of the recording medium P and a transport orientation of the recording medium P.

The correction setting unit 11B sets the in-job correction function. In a case where this setting is performed, the in-job correction function is valid. The correction setting unit 11B accepts, for example, the setting of the in-job correction function via a function setting screen (not illustrated).

In a case where the in-job correction function is set, the printing control unit 11C performs control such that printing is performed by using the second screen obtained for the specific color of the gradation patterns Kp by changing at least one of the number of screen lines or the screen angle of the first screen used for the printing job and printing is performed for the colors other than the specific color of the gradation patterns Kp in the same manner as the screen used for the printing job. Specifically, the specific color is, for example, black (K color). For example, the first screen has the same direction of the main components or the sub-components as the scanning direction of the scanning device 40, and has a relationship in which the number of screen lines is an integer multiple of the scanning resolution of the scanning device 40. In a case where the sub-component of the screen is, for example, 300 lines and 0 degrees and the scanning resolution is, for example, 300 dpi, since the first screen has the relationship in which the number of screen lines is the integer multiple of the scanning resolution of the scanning device 40, that is, a synchronization relationship, moire with a long period may occur.

Since the first screen having the relationship of the integer multiple of the scanning resolution of the scanning device 40 is known in advance, among the screens mounted in the printing device 20, the second screen different from the first screen is mounted in advance in the printing device 20. The second screen is stored, as the screen for the specific color in order to suppress the variation in the scanning gradation, in the ROM 22 or the storage unit 25. The second screen may be different from the first screen only in the number of screen lines, or may be different from the first screen only in the screen angle. In addition, the second screen may be different from the first screen both in the number of screen lines and the screen angle.

More specifically, for example, although there is no particular limitation, it is desirable that a difference between the number of screen lines of the second screen and the number of screen lines of the first screen is 50 lines or less and a difference between the screen angle of the second screen with respect to the scanning direction and the screen angle of the first screen with respect to the scanning direction is 15 degrees or more and 75 degrees or less. Although there is no particular limitation, it is more desirable that the difference between the number of screen lines of the second screen and the number of screen lines of the first screen is, for example, 30 lines or less.

In addition, for the colors other than the specific color (for example, K color) of the gradation patterns Kp, for example, the C color, the M color, and the Y color, control is performed such that printing is performed in the same manner as the screen used for the printing job. Here, the screen angle may be different for each of the C color, the M color, and the Y color.

The printing control unit 11C controls gradation characteristics of the output of the printing device 20 based on the image data of the gradation patterns Kp printed on the recording medium P together with job image data. Note that, the job image data is image data corresponding to the printing job of the user. Specifically, for example, the printing control unit 11C controls the gradation characteristics of the output of the printing device 20 during the execution of the printing job.

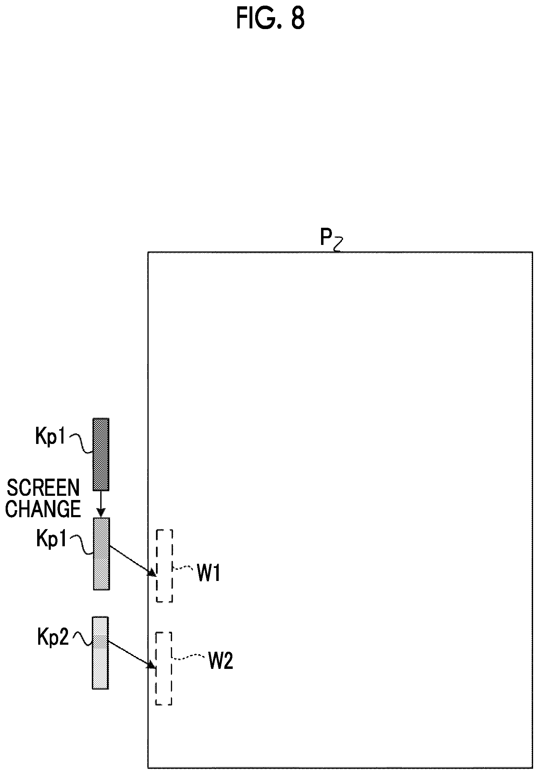

Next, a form in which the screen of the K color is changed in the recording medium P will be specifically described with reference to Fig. 8.

Fig. 8 is a diagram for describing a form in which the screen of the K color is changed in the recording medium P. A position W1 is a position at which a first gradation pattern Kp1 is printed, and a position W2 is a position at which a second gradation pattern Kp2 is printed.

The first screen used for the printing job is set in advance in the first gradation pattern Kp1. The first gradation pattern Kp1 is, for example, a gradation pattern in the K color. In this case, the first screen used for the first gradation pattern Kp1 is changed to the second screen. As described above, the second screen and the first screen are different from each other in at least one of the number of screen lines or the screen angle.

On the other hand, the screen used for the printing job is set in advance in the second gradation pattern Kp2. The second gradation pattern Kp2 is, for example, any one of gradation patterns of C color, M color, or Y color. However, as described above, the screen angle may be different for each of the C color, the M color, and the Y color. The screen used for the second gradation pattern Kp2 is the same as the screen used for the printing job.

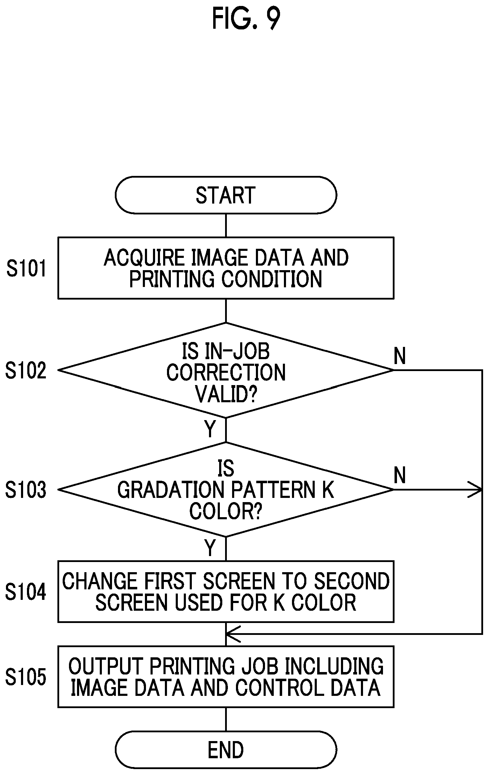

Next, an action of the print server 10 according to the first exemplary embodiment will be described with reference to Fig. 9.

Fig. 9 is a flowchart illustrating an example of a flow of processing by the printing control program 15A according to the first exemplary embodiment.

First, the printing control program 15A is started by the CPU 11 of the print server 10 to execute the following steps.

In step S101 of Fig. 9, the CPU 11 acquires the image data to be printed by the user and the printing condition related to the image data. The printing condition includes, for example, the paper type (size, basis weight, and the like) of the recording medium P and the transport orientation of the recording medium P, as described above.

In step S102, the CPU 11 determines whether or not the in-job correction function is valid. In a case where it is determined that the in-job correction function is valid (in the case of affirmative determination), the processing proceeds to step S103. In a case where it is determined that the in-job correction function is not valid (in the case of negative determination), the processing proceeds to step S105.

In step S103, the CPU 11 determines whether or not the gradation pattern Kp is the K color. In a case where it is determined that the gradation pattern Kp is the K color (in the case of affirmative determination), the processing proceeds to step S104. In a case where it is determined that the gradation pattern Kp is not the K color (in the case of negative determination), the processing proceeds to step S105.

In step S104, the CPU 11 changes the first screen used for the printing job to the second screen used for the K color. As described above, the second screen is a screen in which at least one of the number of screen lines or the screen angle of the first screen is different.

In step S105, the CPU 11 outputs the printing job including the image data and control data to the printing device 20 to end the series of processing by the present printing control program 15A.

As described above, according to the present exemplary embodiment, for the specific color of the gradation pattern, the first screen used for the printing job is changed to the second screen used for the specific color. Thus, it is possible to suppress the variation in the scanning gradation and accurately perform the gradation correction.

In the present exemplary embodiment, although an example in which whether or not to change the screen of the gradation pattern is controlled by determining whether or not the gradation pattern is the K color has been described, control may be performed such that the K color of the gradation pattern and the screen of the gradation pattern are associated with each other in advance without going through the determination processing and the screen of the gradation pattern is changed for the K color of the gradation pattern.

### [Second Exemplary Embodiment]

In the first exemplary embodiment, the form in which the second screen for the specific color is mounted in advance in order to suppress the variation in the scanning gradation has been described. In a second exemplary embodiment, a form in which the second screen is selected and used from among a plurality of types of screens used for the printing job will be described.

As in the first exemplary embodiment, although the second screen for the specific color is, for example, desirably mounted in advance in order to suppress the variation in the scanning gradation, since a large storage capacity is required in order to store screen data, it may be difficult to mount the second screen in advance by the printing device 20. Thus, the second screen may be selected and used from among the plurality of types of screens used for the printing job. The plurality of types of screens described herein are existing screens used for the printing job and are stored in advance in the printing device 20. The second screen is, for example, the screen having the number of screen lines closest to the number of screen lines of the first screen among the plurality of types of screens used for the printing job.

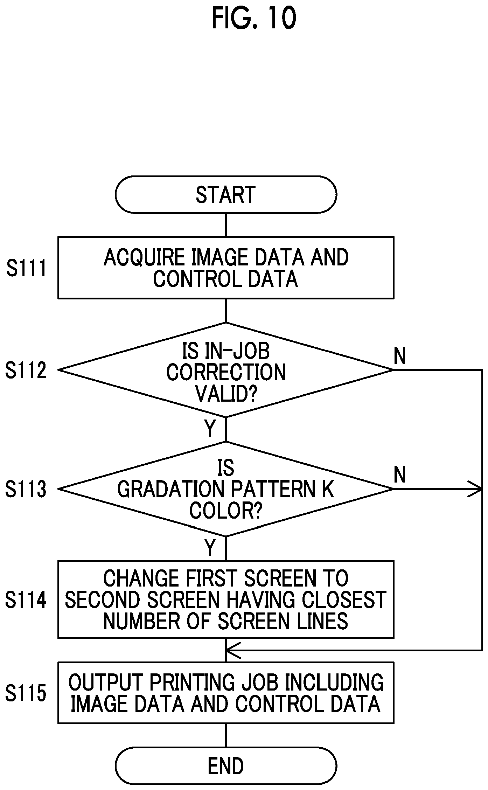

Next, an action of the print server 10 according to the second exemplary embodiment will be described with reference to Fig. 10.

Fig. 10 is a flowchart illustrating an example of a flow of processing by the printing control program 15A according to the second exemplary embodiment.

First, the printing control program 15A is started by the CPU 11 of the print server 10 to execute the following steps.

In step S111 of Fig. 10, the CPU 11 acquires the image data to be printed by the user and the printing condition related to the image data. The printing condition includes, for example, the paper type (size, basis weight, and the like) of the recording medium P and the transport orientation of the recording medium P, as described above.

In step S112, the CPU 11 determines whether or not the in-job correction function is valid. In a case where it is determined that the in-job correction function is valid (in the case of affirmative determination), the processing proceeds to step S113, and in a case where it is determined that the in-job correction function is not valid (in the case of negative determination), the processing proceeds to step S115.

In step S113, the CPU 11 determines whether or not the gradation pattern Kp is the K color. In a case in which it is determined that the gradation pattern Kp is the K color (in the case of affirmative determination), the processing proceeds to step S114, and in a case in which it is determined that the gradation pattern Kp is not the K color (in the case of negative determination), the processing proceeds to step S115.

In step S114, the CPU 11 changes the first screen used for the printing job to another second screen. As described above, the second screen is a screen having the number of screen lines closest to the number of screen lines of the first screen, among the plurality of types of screens used for the printing job. The second screen is selected and used from among the existing screens stored in advance in the printing device 20.

In step S115, the CPU 11 outputs the printing job including the image data and the control data to the printing device 20 to end the series of processing performed by the main printing control program 15A.

As described above, according to the present exemplary embodiment, the second screen used for the specific color of the gradation pattern is selected from among the plurality of types of screens used for the printing job. Thus, it is possible to suppress the variation in the scanning gradation and accurately perform the gradation correction while suppressing an increase in storage capacity.

In the present exemplary embodiment, although an example in which whether or not to change the screen of the gradation pattern is controlled by determining whether or not the gradation pattern is the K color has been described, control may be performed such that the K color of the gradation pattern and the screen of the gradation pattern are associated with each other in advance without going through the determination processing and the screen of the gradation pattern is changed for the K color of the gradation pattern.

In each of the exemplary embodiments, although the print server 10 has been described as the control subject, the printing device 20 may be a control subject. In a case where the printing device 20 is the control subject, the printing control program according to the present exemplary embodiment may be stored in the storage unit 25 or the ROM 22 of the printing device 20, and the CPU 21 may read out and execute the printing control program.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The image forming system according to the exemplary embodiment is described as an example. The exemplary embodiment may be in a form of a program causing a computer to execute the functions of the units provided in the image forming system. The exemplary embodiment may be in the form of a non-transitory computer readable medium storing the program.

In addition, the configuration of the image forming system described in the above exemplary embodiment is an example, and may be changed in accordance with the situation without departing from the gist.

The flow of processing of the program described in the above exemplary embodiment is also an example, and unnecessary steps may be deleted, new steps may be added, or the processing order may be changed without departing from the scope.

In the above exemplary embodiment, although a case where the processing according to the exemplary embodiment is realized by a software configuration by using a computer by executing a program has been described, the present disclosure is not limited thereto. The exemplary embodiment may be realized by, for example, a hardware configuration or a combination of hardware and software configurations.

The following additional supplementary notes are further disclosed regarding the above exemplary embodiment.

### (Supplementary Note)

(((1))) An image forming system comprising:
   a processor configured to:
   perform control such that printing is performed for a specific color of a gradation pattern printed on a recording medium by using a second screen obtained by changing at least one of the number of screen lines or a screen angle of a first screen used for a printing job and printing is performed for a color other than the specific color of the gradation pattern in a same manner as the screen used for the printing job in a case where the gradation pattern is scanned by a scanning device and is gradation-corrected.
(((2))) The image forming system according to (((1))),
   wherein the specific color is black.
(((3))) The image forming system according to (((1))) or (((2))),
   wherein the first screen has a same direction of a main component or a sub-component as a scanning direction of the scanning device, and has a relationship in which the number of screen lines of the first screen is an integer multiple of a scanning resolution of the scanning device.
(((4))) The image forming system according to (((3))),
   wherein a difference between the number of screen lines of the second screen and the number of screen lines of the first screen is 50 lines or less, and a difference between a screen angle of the second screen with respect to the scanning direction and a screen angle of the first screen with respect to the scanning direction is 15 degrees or more and 75 degrees or less.
(((5))) The image forming system according to any one of (((1))) to (((4))),
   wherein a plurality of types of screens used for the printing job are stored in advance, and
   the second screen is a screen having the number of screen lines closest to the number of screen lines of the first screen, among the plurality of types of screens.
(((6))) The image forming system according to any one of (((1))) to (((5))),
   wherein the processor is configured to:
   perform gradation correction based on a scanning result obtained by scanning the gradation pattern before execution of the printing job or during the execution of the printing job.
(((7))) A printing control program causing a computer to execute processing comprising:
   performing control such that printing is performed for a specific color of a gradation pattern printed on a recording medium by using a second screen obtained by changing at least one of the number of screen lines or a screen angle of a first screen used for a printing job and printing is performed for a color other than the specific color of the gradation pattern in a same manner as the screen used for the printing job in a case where the gradation pattern is scanned by a scanning device and is gradation-corrected.

According to (((1))) and (((7))), in a case where the gradation pattern printed on the recording medium is scanned by the scanning device and is gradation-corrected, it is possible to accurately perform the gradation correction as compared with a case where the screen used for the printing job and the screen of the gradation pattern are the same.

According to (((2))), in a case where the specific color is black, it is possible to perform accurately the gradation correction as compared with a case where the screen used for the printing job and the screen for the gradation pattern are the same.

According to (((3))), in a case where the number of screen lines of the first screen used for the printing job is synchronized with the scanning resolution of the scanning device, it is possible to accurately perform the gradation correction as compared with a case where the first screen and the screen of the gradation pattern are the same.

According to (((4))), it is possible to define the difference in the number of screen lines and the difference in the screen angle in order to perform the gradation correction with higher accuracy.

According to (((5))), it is possible to accurately perform the gradation correction by using the existing screen without mounting the screen for the specific color.

According to (((6))), it is possible to perform the gradation correction before the execution of the printing job or during the execution of the printing job.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: print server
11: CPU
11A: acquisition unit
11B: correction setting unit
11C: printing control unit
12: ROM
13: RAM
14: I/O
15: storage unit
15A: printing control program
16: display unit
17: operation unit
18: communication unit
20: printing device
40: scanning device
100: image forming system

## Claims

1. An image forming system comprising:
a processor configured to:
perform control such that printing is performed for a specific color of a gradation pattern printed on a recording medium by using a second screen obtained by changing at least one of the number of screen lines or a screen angle of a first screen used for a printing job and printing is performed for a color other than the specific color of the gradation pattern in a same manner as the screen used for the printing job in a case where the gradation pattern is scanned by a scanning device and is gradation-corrected.

2. The image forming system according to claim 1,
wherein the specific color is black.

3. The image forming system according to claim 1 or 2,
wherein the first screen has a same direction of a main component or a sub-component as a scanning direction of the scanning device, and has a relationship in which the number of screen lines of the first screen is an integer multiple of a scanning resolution of the scanning device.

4. The image forming system according to claim 3,
wherein a difference between the number of screen lines of the second screen and the number of screen lines of the first screen is 50 lines or less, and a difference between a screen angle of the second screen with respect to the scanning direction and a screen angle of the first screen with respect to the scanning direction is 15 degrees or more and 75 degrees or less.

5. The image forming system according to any one of claims 1 to 4,
wherein a plurality of types of screens used for the printing job are stored in advance, and
the second screen is a screen having the number of screen lines closest to the number of screen lines of the first screen, among the plurality of types of screens.

6. The image forming system according to any one of claims 1 to 5,
wherein the processor is configured to:
perform gradation correction based on a scanning result obtained by scanning the gradation pattern before execution of the printing job or during the execution of the printing job.

7. A printing control program causing a computer to execute processing comprising:
performing control such that printing is performed for a specific color of a gradation pattern printed on a recording medium by using a second screen obtained by changing at least one of the number of screen lines or a screen angle of a first screen used for a printing job and printing is performed for a color other than the specific color of the gradation pattern in a same manner as the screen used for the printing job in a case where the gradation pattern is scanned by a scanning device and is gradation-corrected.

8. A printing control method comprising:
performing control such that printing is performed for a specific color of a gradation pattern printed on a recording medium by using a second screen obtained by changing at least one of the number of screen lines or a screen angle of a first screen used for a printing job and printing is performed for a color other than the specific color of the gradation pattern in a same manner as the screen used for the printing job in a case where the gradation pattern is scanned by a scanning device and is gradation-corrected.
